Europäisches Patentamt

European Patent Office

Office européen des brevets

(19)

(11) Publication number: **0 150 737**
**B1**

# EUROPEAN PATENT SPECIFICATION

(12)

(45) Date of publication of patent specification: **04.10.89**

(51) Int. Cl.⁴: **G 21 C 3/62**

(21) Application number: **85100239.4**

(22) Date of filing: **11.01.85**

(54) **Process for treating nuclear fuel scrap.**

(30) Priority: **26.01.84 US 574305**

(43) Date of publication of application:
**07.08.85 Bulletin 85/32**

(45) Publication of the grant of the patent:
**04.10.89 Bulletin 89/40**

(84) Designated Contracting States:
**BE DE FR GB IT SE**

(56) References cited:
**EP-A-0 012 915**
**EP-A-0 084 129**
**US-A-4 053 559**

(73) Proprietor: **WESTINGHOUSE ELECTRIC CORPORATION**
**Westinghouse Building Gateway Center**
**Pittsburgh Pennsylvania 15222 (US)**

(72) Inventor: **Chieh Wu, Christopher Kuo**
**Northlake Road**
**Columbia South Carolina 29250 (US)**
Inventor: **Shah, Hemant Hiralal**
**PFDL Cheswick Avenue**
**Cheswick Pennsylvania 15024 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

This invention relates to a process for treating nuclear fuel scrap. In the fabrication of nuclear fuel, nuclear fuel scrap is formed which must be treated and recycled to the fabrication process. During the conversion of uranium hexafluoride to uranium dioxide, for use as a nuclear fuel, uranium dioxide powder is often formed which has an excessive amount of fluoride content or moisture content. In the fabrication of fuel pellets, with formation of green pellets and sintering thereof to produce usable sintered uranium dioxide fuel pellets, scrap, such as rejected pellets, pellet chips, grinder dust and green scrap are also produced.

The present invention is directed to a process for the treatment and recycling of high fluoride or high moisture content nuclear fuel scraps by a pulsed powder bed process that enables recycling of these scraps to the fuel pellet production system.

As described in EP—A—084 129 scrap treatment of certain scraps can be effected that converts the scrap into a form which can be combined with virgin uranium dioxide in the formation of fuel pellets. In said application, a process and apparatus are described which provide for the treatment of nuclear fuel fabrication scrap such as rejected green pellets, chips from pellets, grinder dust, green (unsintered) scrap, and rejected virgin powder, by fluidizing the scrap, oxidizing the scrap with oxygen at a temperature of less than 400°C and then reducing the oxidized scrap with hydrogen at a temperature of between 400—700°C using a pulsed bed fluidizer.

The pulsed bed fluidizer, as described in said copending application comprises a fluidized bed reactor that consists of a cylindrical column having a conical lower portion and an enlarged upper portion. The fuel scrap is charged to the reactor and air, hydrogen, and inert gas lines pass to a mixer that mixes the gases, as desired, which mixed gases then pass to a surge tank and a pulse valve, which pulses the gas. The pulsed gas then passes to a preheater, and then is fed through gas inlets at a gas inlet assembly of the reactor. In the gas inlet assembly, the gas passes initially through a porous metal nozzle for partial fluidization of the scrap charge, which permits the gas to push up through the column. A conduit from the reactor is used to pneumatically remove the product, while off gases produced in the reactor pass through filters and are disharged from the top of the reactor.

While the process as described in said copending application permits recovery of certain fuel scraps by an oxidation and reduction process, the same is not directed to processing and recycling of certain other types of nuclear fuel scraps.

For example, in the conversion of uranium hexafluoride to uranium dioxide, for use in forming nuclear fuel pellets, scrap is produced which may be either high in fluoride content ($F^-$), or which may be high in moisture content. These impurity-containing uranium dioxide scraps are not usable in the formation of nuclear fuel pellets and must be treated if they are to be recycled as usable materials.

It is an object of the present invention to provide a process for treating nuclear fuel scrap in a pulsed powder bed reactor, which scrap is either high in fluoride content or high in moisture content.

EP—A—012 915 discloses a process for producing uranium dioxide powder in which a nitrogen gas containing stream is used to obtain a low residual fluoride content.

The present invention aims to provide an improved process for producing uranium dioxide suitable for manufacturing nuclear fuel pellets from nuclear fuel scrap.

Accordingly, the invention resides in a process for producing uranium dioxide suitable for manufacturing nuclear fuel pellets which comprises reducing the fluoride or moisture content of uranium dioxide scrap formed during the conversion of uranium hexafluoride to uranium dioxide, characterized by contacting said scrap with a fluid stream within a pulsed powder fluidized bed, said scrap when having a fluoride content of up to 0.5 percent weight being contacted with a stream of nitrogen-containing steam at a temperature of 500—650°C for a period of time sufficient to reduce said fluoride content to less than 50 parts per million or when having a moisture content of up to 1 percent by weight being contacted with a stream of nitrogen at 150—300°C for a period of time sufficient to reduce said moisture content to less than 0.4 percent by weight.

The scraps are treated in a batchwise process and after treatment, may be used for formation of uranium dioxide nuclear fuel pellets.

The present process provides for the treatment of nuclear fuel scrap which have either a high fluoride content or a high moisture content in a pulsed powder bed treatment step which enables recycling of the treated scrap for mixing with virgin fuel in the formation of nuclear fuel pellets.

The nuclear fuel scrap treated according to the presnet process can come from pellets fabricated for light water reactors, which consist entirely of $UO_2$, or it can come from pellets fabricated for fast breeder fuel and consist of a mixture of $UO_2$ and $PuO_2$ containing up to 15 percent $PuO_2$. For the purposes of brevity, the following description will refer to $UO_2$ fuels, although the $UO_2$ and $PuO_2$ mixed fuels are also subject to the present treatment process.

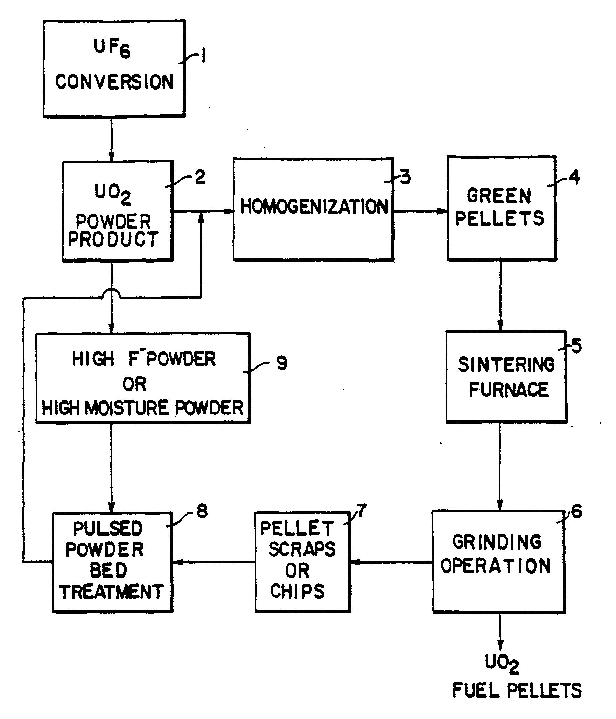

In order that the invention can be more clearly understood, convenient embodiments thereof will now be described, by way of example, with reference to the accompanying drawing which is a flow chart illustrating the treatment of nuclear fuel scrap containing impurities of high fluoride or high moisture content.

Referring to the drawing, uranium hexafluoride ($UF_6$) is converted by known processes 1, to a uranium dioxide powder product 2. The uranium dioxide product 2 is homogenized 3, and formed into green pellets 4 for use as a nuclear fuel. These green pellets 4 are sintered in a sintering furnace 5 and then ground to the desired size in a grinding operation 6, for use within cladding tubes, as uranium dioxide pellets. Pellet scraps or chips 7 which are unusable are sent to a pulsed powder bed treatment system 8, as described in aforementioned copending United States Patent Application Serial No. 340,593, where they are oxidized and then reduced and returned to be mixed with virgin uranium dioxide powder in the homogenization step 3, and formation of further fuel pellets.

High fluoride content impurity or high moisture content impurity powders 9, which are separated from the uranium dioxide product 2 formed in the uranium hexafluoride conversion process 1, are also treated in a pulsed powder bed treatment system 8, for removal of the unwanted impurities such that these treated powders may also be mixed with virgin uranium dioxide powders for homogenization and formation of fuel pellets.

In the conversion of uranium hexafluoride to uranium dioxide, by calcination, portions of uranium dioxide powder containing a high fluoride content are often formed. Such a product should normally contain a fluoride content of less than 50 parts per million. However, some of the product, so produced, may contain a fluoride content of up to 0.5 percent by weight, and as such, is considered as scrap. In the present process, a batchwise treatment of such high fluoride content nuclear fuel scrap may be treated to render it low enough in fluoride content as to be mixable with virgin uranium dioxide for use in fuel pellet production.

The high fluoride content powder scrap is charged to a pulsed powder bed reactor and the scrap subjected to pulsed fluidized treatment with steam or a mixture of steam and hydrogen. In such treatment, the steam is charged to a stream of nitrogen gas or nitrogen gas containing a minor amount of hydrogen, and the mixed fluids passed to the preheater of the system and then to the pulsed reactor for contact with the high fluoride content scrap.

The fluid stream is heated, for contact with the high fluoride content scrap to a temperature of 500—650°C with a temperature between 550—650°C preferred. The steam, or steam and hydrogen fluid, strips the fluoride, primarily as hydrogen fluoride, from the scrap mateerial, with the reaction products formed discharged with the off gas stream from the reactor.

The contact time for the fluid stream with the high fluoride content scrap is that sufficient to lower the fluoride content of the scrap to below 50 parts per million (ppm) by weight, and preferably below 20 ppm. Contact times of about 2—3 hours are preferred, using temperatures of 500—650°C. After treatment at said temperature, the low fluoride content material is dried by passage of nitrogen gas therethrough.

An especially useful fluid stream for the removal of the high fluoride content of the scrap at temperatures of 500—650°C is a fluid stream comprised of 3—5 percent steam, 0—5 percent hydrogen, and 90—97 percent nitrogen, by weight.

In the treatment of high moisture content powder scrap, which can contain up to one percent by weight of moisture, the scrap is charged to the pulsed powder bed reactor and contacted with a stream of heated dry nitrogen. The temperature of the nitrogen should be 150—300°C, with a temperature of about 200°C being preferred.

The contact of the high moisture content scrap with heated nitrogen should be for a period of time sufficient to lower the moisture content to below 0.4 percent by weight. Contact times of 1—2 hours, using a temperature of about 200°C is sufficient.

With the use of the present process, where a pulsed powder bed reactor is used to treat high fluoride and high moisture content nuclear fuel scraps, such a pulsed powder bed reactor system is usable in the treatment of the fuel waste or scrap materials from a nuclear fuel fabrication system. Thus, this enables the batchwise use of a single pulsed powder bed reactor system in overall treatment of such nuclear fuel scraps.

### Identification of reference numerals used in the drawings

| Legend | Ref. No. | Figure |
|---|---|---|
| UF$_6$ Conversion | 1 | 1 |
| UO$_2$ Powder Product | 2 | 1 |
| Homogenization | 3 | 1 |
| Green Pellets | 4 | 1 |
| Sintering Furnace | 5 | 1 |
| Grinding Operation | 6 | 1 |
| Pellet Scraps or Chips | 7 | 1 |
| Pulsed Powder Bed Treatment | 8 | 1 |
| High F-Powder or High Moisture Powder | 9 | 1 |

**Claims**

1. A process for producing uranium dioxide suitable for manufacturing nuclear fuel pellets which comprises reducing the fluoride or moisture content of uranium dioxide scrap formed during the conversion of uranium hexafluoride to uranium dioxide, characterized by contacting said scrap with a fluid stream within a pulsed powder fluidized bed, said scrap when having a fluoride content of up to 0.5 percent weight being contacted with a stream of nitrogen-containing steam at a temperature of 500—650°C for a period of time sufficient to reduce said fluoride content to less than 50 parts per million or when having a moisture content of up to 1 percent by weight being contacted with a stream of nitrogen at 150—300°C for a period of time sufficient to reduce said moisture content of less than 0.4 percent by weight.

2. A process according to claim 1, characterized in that the stream of nitrogen-containing steam also contains hydrogen gas.

3. A process according to claim 2, characterized in that the stream comprises 3—5 weight percent steam, up to 5 weight percent hydrogen and nitrogen.

4. A process according to claim 1, 2 or 3, characterized in that the stream of nitrogen-containing steam contacts its scrap for a period of 2—3 hours.

5. A process according to any of claims 1 to 4, characterized in that the fluoride content is reduced to less than 20 parts per million.

6. A process according to claim 1, characterized in that the stream of nitrogen is at a temperature of about 200°C.

7. A process according to claim 1 or 6, characterized in that the stream of nitrogen contacts its scrap for 1—2 hours.

**Patentansprüche**

1. Verfahren zur Herstellung von zur Fertigung von Kernbrennstofftabletten geeignetem Urandioxid, bei welchem der Fluorid- oder Feuchtigkeitsgehalt von bei der Umsetzung von Uranhexafluorid zu Urandioxid entstehendem Urandioxidabfall verringert wird, dadurch gekennzeichnet, daß der Abfall in einem pulsierend betriebenen Pulverfließbett mit einem Strömungsmittelstrom in Berührung gebracht wird, wobei der Abfall, wenn er einen Fluoridgehalt von bis zu 0,5 Gewichtsprozent aufweist, mit einem stickstoffhaltigen Dampfstrom mit einer Temperatur von 500 bis 650°C während einer zur Verringerung des Fluoridgehalts auf weniger als 50 Teile pro Million ausreichenden Zeitdauer in Berührung gebracht wird, oder wenn der Abfall einem Feuchtigkeitsgehalt von bis zu 1 Gewichtsprozent aufweist, mit einem Stickstoffstrom bei 150 bis 300°C während einer zur Verringerung des Feuchtigkeitsgehalts auf weniger als 0,4 Gewichtsprozent ausreichenden Zeitdauer in Berührung gebracht wird.

2. Verfahren nach Anspruch 1, dadurch gekennzeichnet, daß der stickstoffhaltige Dampfstrom auch Wasserstoffgas enthält.

3. Verfahren nach Anspruch 2, dadurch gekennzeichnet, daß der Dampfstrom 3 bis 5 Gewichtsprozent Dampf, bis zu 5 Gewichtsprozent Wasserstoff und Stickstoff enthält.

4. Verfahren nach Anspruch 1, 2 oder 3, dadurch gekennzeichnet, daß der stickstoffhaltige Dampfstrom während einer Zeitdauer von 2 bis 3 Stunden mit dem Abfall in Berührung gebracht wird.

5. Verfahren nach einem der Ansprüche 1 bis 4, dadurch gekennzeichnet, daß der Fluoridgehalt auf weniger als 20 Teile pro Million verringert wird.

6. Verfahren nach Anspruch 1, dadurch gekennzeichnet, daß der Stickstoffstrom eine Temperatur von etwa 200°C hat.

7. Verfahren nach Anspruch 1 oder 6, dadurch gekennzeichnet, daß der Stickstoffstrom während 1 bis 2 Stunden mit dem Abfall in Berührung gebracht wird.

**Revendications**

1. Procédé pour produire du dioxyde d'uranium convenant pour fabriquer des pastilles de combustible nucléaire qui comporte la réduction du contenu de fluorure ou d'humidité des déchets de dioxyde d'uranium formés durant la conversion de l'hexafluorure d'uranium en dioxyde d'uranium, caractérisé par la mise en contact desdits déchets avec un courant de fluide à l'intérieur d'un lit fluidisé de poudre pulsée, lesdits déchets, lorsqu'ils ont une proportion de fluorure s'élevant à 0,5 pour cent en poids, étant mis en contact avec un courant de vapeur contenant de l'azote à une température comprise entre 500 et 650°C pendant une période de temps suffisante pour réduire ladite proportion de fluorure à moins de 50 parties par million, ou, lorsqu'ils ont une proportion d'humidité atteignant 1 pour cent en poids, étant mis en contact avec un courant d'azote entre 150 et 300°C pendant une période de temps suffisante pour réduire ladite proportion d'humidité à moins de 0,4 pour cent en poids.

2. Procédé selon la revendication 1, caractérisé en ce que le courant de vapeur contenant de l'azote contient également de l'hydrogène gazeux.

3. Procédé selon la revendication 2, caractérisé en ce que le courant comporte entre 3 et 5 pour cent en poids de vapeur, et jusqu'à 5 pour cent en poids d'hydrogène et d'azote.

4. Procédé selon la revendication 1, 2 ou 3, caractérisé en ce que le courant de vapeur contenant de l'azote vient en contact avec ses déchets pendant une période de 2 à 3 heures.

5. Procédé selon l'une quelconque des revendications 1 à 4, caractérisé en ce que la proportion en fluorure est réduite à moins de 20 parties par million.

6. Procédé selon la revendication 1, caractérisé en ce que le courant d'azote est à une température d'environ 200°C.

7. Procédé selon les revendications 1 à 6, caractérisé en ce que le courant d'azote vient en contact avec ses déchets pendant 1 à 2 heures.

UF$_6$
CONVERSION — 1

UO$_2$
POWDER
PRODUCT — 2

HOMOGENIZATION — 3

GREEN
PELLETS — 4

HIGH F$^-$ POWDER
OR
HIGH MOISTURE POWDER — 9

SINTERING
FURNACE — 5

PULSED
POWDER
BED
TREATMENT — 8

PELLET
SCRAPS
OR
CHIPS — 7

GRINDING
OPERATION — 6

UO$_2$
FUEL PELLETS